# EUROPEAN PATENT APPLICATION

(11) **EP 2 385 467 A1**
(43) Date of publication of application: **09.11.2011**
(21) Application number: 10735612.3
(22) Date of filing: 22.01.2010
(51) Int. Cl.: G06F 11/28

(54) **STATE DISPLAY APPARATUS**

(30) Priority: 30.01.2009 JP 2009019666; 30.01.2009 JP 2009019817
(71) Applicant: Mitsubishi Electric Corporation, Tokyo 100-8310 (JP)
(72) Inventor: KOMIYA, Noriyuki, Tokyo 100-8310 (JP); KUSHIRO, Noriyuki, Tokyo 100-8310 (JP); NAKATA, Masanori, Tokyo 100-8310 (JP); KATSUKURA, Makoto, Tokyo 100-8310 (JP)
(74) Representative: Pfenning, Meinig & Partner GbR
(86) International application number: PCT/JP2010/000363
(87) International publication number: WO 2010/087140

(57) **Abstract**

Provided is a development environment which makes it easy to verify the performance, processing load, and display status in an actual built-in device, enabling a reduced work cycle time during development and high work efficiency.

Display means (107), central processing means (105), drawing processing means (106), and storage means (101) are provided. The central processing means (105), at every predetermined operation unit clock, interprets content stored in the storage means (101) at an instruction address and performs various computation processing. The drawing processing means (106) shares the storage means (101) with the central processing means (105) and performs drawing processing. The display means (107) shares with the drawing means (106) a predetermined memory space starting at a display address in the storage means (101) and makes a display device (108) perform display in accordance with the memory state of the predetermined memory space starting at the display address. The storage means (101) and/or central processing means (105) is allowed to be provided outside of the status display apparatus.

## Description

### Technical Field

The present invention relates to a status display apparatus and a method for displaying the status of a device such as an air conditioner or an electronic device.

### Background Art

Due to the increased functionality of electronic devices, such as air conditioners or electronic home appliances, it has become difficult to operate such devices by using only a fixed-content display apparatus, which is directly connected to several buttons, such as a combination of segmented liquid crystal displays. Hence, devices have come to be recently produced, which realize both multi-functionality and ease of use by displaying any graphics/images using a general purpose liquid crystal (a so-called full-dot liquid crystal) device which is getting to be a reasonable price or the like, and further through the use of this capability, by using a method (a so-called graphical user interface: GUI) of switching display screens, often in combination with displaying explanation windows shaped like small windows. This has led to improved usability for users due to operability allowing the users to use basic functions immediately, and also advanced functions. However, in the display apparatus used in these devices, there are considerable restrictions on content displayed by a liquid crystal device and on an operation apparatus from the viewpoint of manufacturing cost.

From the viewpoints of cost, heat generation, and power consumption, a microcomputer used in a built-in device has low processing performance compared with a personal computer, and has a relative performance of less than 1/100 in speed and 1/1000 in memory capacity in many cases. Since the full-dot liquid crystal device mentioned above realizes freedom of display by using a combination of minute illumination points, many instructions are required to display even one graphic object. For example, approximately 100 minute illumination points need to be changed to draw a 1 cm by 1 cm square, requiring approximately 1000 instructions. For GUI processing in which such graphic objects are combined and, further, drawing is frequently performed due to switching of display screens, most of the processing power of the microcomputer is consumed, and in addition, most of the memory capacity is consumed for intermediate information processing. This causes execution of primary application programs for controlling air conditioners or home appliances to be delayed, for example. Consequently, it becomes difficult to design control application programs, and in many situations complex combinations of GUI processing and control application processing are required to maintain satisfactory overall performance. Accordingly, when some failure occurs, it becomes very difficult to determine whether this is a drawing request error, a control application processing error, or another processing error so as to isolate the cause.

It is difficult to develop a system which works properly, while isolating the causes of such failures and solving the problems, directly on a microcomputer having the severe restrictions described above. Hence, it is common practice to perform the development on a personal computer that has sufficient performance and a high degree of freedom compared with a microcomputer. In this case, when a display apparatus of a built-in device is used to check a GUI screen, a complex task is generated in which a GUI application program created in the personal computer is first transferred to the built-in device after conversion and then made to perform display. Hence, there have been attempts to emulate the screen displayed in the built-in device in a development system, such as a personal computer, thereby increasing the development efficiency (refer to Patent Literature 1, for example). When a screen is displayed using emulation or simulation in this manner, since display is performed on a display apparatus having characteristics different from those in the actual built-in device, there is a problem in that it is impossible to verify visibilities, differences in display among liquid crystal panels having different numbers of displayable colors, and the like. To solve this problem there have been attempts to provide an apparatus that can perform conversion and display GUI screens in accordance with the characteristics of actual display devices (refer to Patent Literature 2, for example).

### Patent Literature

Patent Literature 1: Japanese Unexamined Patent Application Publication No. 2006-209759
Patent Literature 2: Japanese Unexamined Patent Application Publication No. 2001-318811

### Summary of Invention

### Technical Problem

As described above, in the conventional techniques, since software needs to be first transferred, through conversion, to a built-in device and tested, to perform development using the actual device of the built-in device, there is a problem in that a loss time for that operation is generated. In addition, in the emulation performed by the development system, since the operation is different from that of the actual microcomputer, there is a problem in that the performance in the actual microcomputer or the status of a load imposed on the microcomputer is not known. Further, even if verification is performed using screens displayed after conversion in accordance with the characteristics of a display apparatus, final evaluation using the actual device is always needed, resulting in a problem of increased evaluation time and evaluation cost.

It is an object of the present invention to solve the above described problems and to provide a development environment which makes it easy to verify the performance, processing load, and display status in the actual built-in device, and realizes a decreased work cycle time during development and high work efficiency.

### Solution to Problem

A status display apparatus according to the present invention includes: display means; central processing means; drawing processing means; and storage means, where the central processing means, at every predetermined operation unit clock, interprets content stored in the storage means at an instruction address and performs an arithmetic operation, a logic operation, data transfer, instruction address change, or conditional instruction address change, where the drawing processing means shares the storage means with the central processing means, and performs a sequence of drawing processing of interpreting content stored in the storage means at an indicated address, to compute coordinates of a set of minute points forming an image or a figure, changing memory states at locations corresponding to the coordinates in a predetermined memory space starting at a drawing address in the storage means, and making a next interpretation location be reflected in the indicated address, where the display means shares a predetermined memory space starting at a display address in the storage means with the drawing processing means, and performs display on a display device in accordance with a memory state of the predetermined memory space starting at the display address, and where the storage means and/or the central processing means is allowed to be provided outside of the status display apparatus.

### Advantageous Effects of Invention

According to the status display apparatus of the present invention, a status display apparatus which enables display on an actual device as a result of drawing processing being performed in an actual built-in device can be realized under the control of a development environment such as a personal computer. Hence, a development environment is obtained which makes it easy to verify the performance, processing load, and display status in the actual built-in device, and realizes a decreased work cycle time during development and high work efficiency.

### Brief Description of Drawings

[Fig. 1] Fig. 1 illustrates an exemplary schematic configuration of a status display apparatus according to Embodiment 1 of the present invention.
[Fig. 2] Fig. 2 illustrates an exemplary schematic configuration of a status display apparatus according to Embodiment 1 of the present invention.
[Fig. 3] Fig. 3 illustrates an exemplary schematic configuration of a status display apparatus according to Embodiment 1 of the present invention.
[Fig. 4] Fig. 4 illustrates an exemplary schematic configuration of a status display apparatus according to Embodiment 1 of the present invention.
[Fig. 5] Fig. 5 illustrates an exemplary schematic configuration of a status display apparatus according to Embodiment 1 of the present invention.
[Fig. 6] Fig. 6 illustrates an exemplary schematic configuration of a status display apparatus according to Embodiment 1 of the present invention.
[Fig. 7] Fig. 7 illustrates an exemplary schematic configuration of a status display apparatus according to Embodiment 1 of the present invention.
[Fig. 8] Fig. 8 illustrates an exemplary schematic configuration of a drawing request according to Embodiment 1 of the present invention.
[Fig. 9] Fig. 9 illustrates an exemplary drawing operation flow of a status display apparatus according to Embodiment 1 of the present invention.
[Fig. 10] Fig. 10 illustrates an exemplary operation of a status display apparatus according to Embodiment 1 of the present invention.
[Fig. 11] Fig. 11 illustrates an exemplary operation of a status display apparatus according to Embodiment 1 of the present invention.
[Fig. 12] Fig. 12 illustrates an exemplary operation of a status display apparatus according to Embodiment 1 of the present invention.

### Description of Embodiments

### Embodiment 1

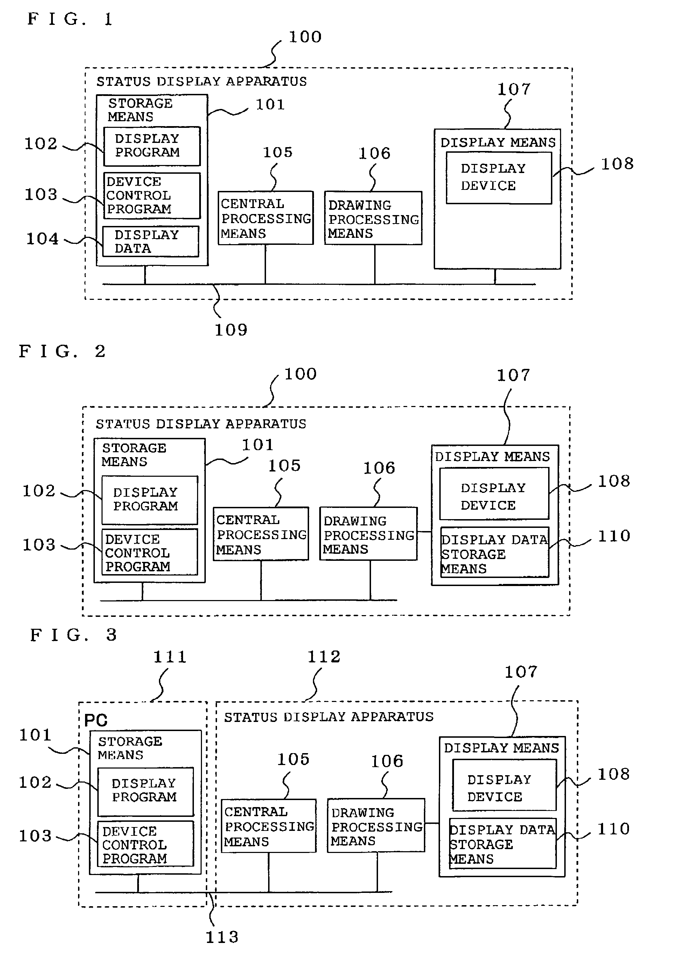

Figs. 1, 2, 3, 4, 5, 6, 7, and 8 illustrate exemplary schematic configurations of a status display apparatus according to Embodiment 1 of the present invention.
Referring to Figs. 1, 2, 8, and 9, the configurations and basic operations of the status display apparatus are described.
A status display apparatus 100 includes central processing means 105, drawing processing means 106, display means 107, and storage means 101, and the storage means 101 contains a display program 102, a device control program 103, and display data 104.

The operations are described with reference to Figs. 1, 8, and 9 assuming that a display device 108 of the display means 107 is a full-dot liquid crystal display device.
The display means 107 displays, through illumination at high speed, content in accordance with shifting of a display position from the top left to the right and then downward on the full-dot display device sequentially with time, thereby displaying a two-dimensional image utilizing visual after-image effect. For this operation, the display means 107 sequentially obtains necessary illumination information and color information from the display data area 104, thereby performing illumination.

The central processing means 105, by indicating a location within the storage means 101 using an instruction address, interprets information stored in the indicated location on the basis of the content definition in the central processing means 105 and thereby performs arithmetic operations, logic operations, data transfer, an instruction address change operation, and a conditional instruction address change operation. Using a program which combines these operations or the like, complex computation and control of a device are realized. In the present embodiment, predetermined complex operation is realized using information stored at the locations of the display program 102 and the device control program 103. A drawing request 200 described below may be stored as data in the area of the display program 102 in advance, or the drawing request 200 created by the central processing means 105 during operation may be stored in the area of the display program 102.

The drawing processing means 106 is a specialized logic circuit for display processing and has a function of performing reading and writing from and to the storage means 101.

That is, the drawing processing means 106 reads and interprets the drawing request 200, located at an indicated address, included within the display program 102 (step 901), and activates a logic circuit for one of the functions of line drawing, square-frame drawing, square painting, image drawing, and the like in accordance with a drawing instruction 201 (step 902), or performs a function of setting a drawing area or the like.

A certain activated logic circuit reads coordinate information from the drawing instruction 201, and converts an image based on the coordinate information into a change in illumination information or color information at a predetermined location in the display data area 104 (step 903). The indicated address is changed to a specified address if there is an address change instruction in the drawing instructions, and if there is no address change instruction, the indicated address is automatically advanced by one drawing instruction.

That is, when the drawing request 200 is stored at a location corresponding to the indicated address in the display program 102, drawing processing is performed and a screen is displayed.

The display data 104 area, which is provided within the storage means 101 in the above example, may be included as display data storage means 110 in the display means 107 (Fig. 2). The display data storage means 110 and the storage means 101 may be physically different devices.

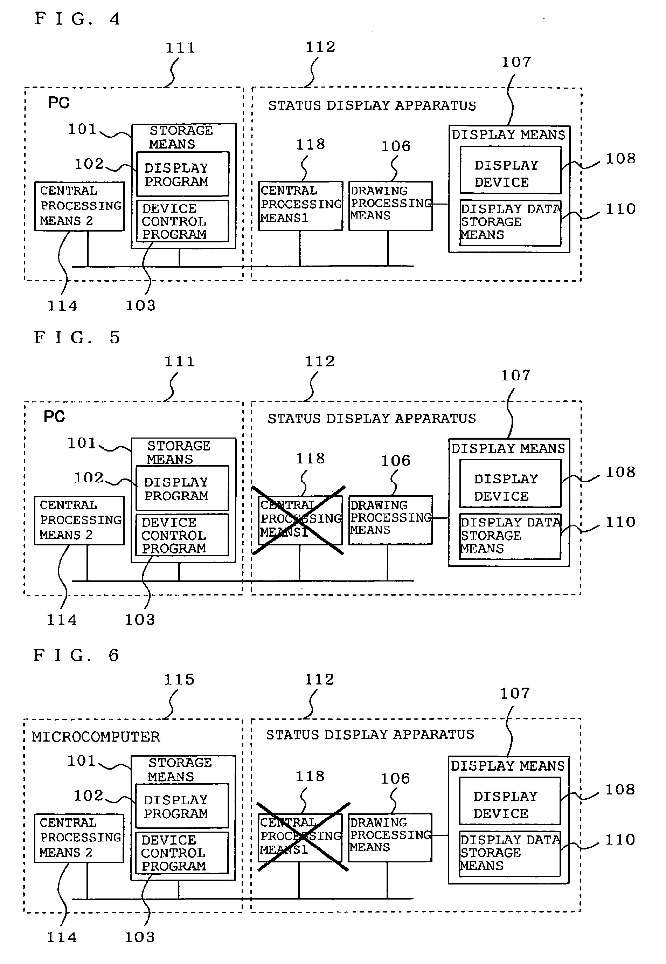

Next, configurations will be described with reference to Figs. 3 and 4.
In Fig. 3, the storage means 101 is formed in an external device which is different from a status display apparatus 112. Here, it is assumed that the storage means 101 is formed by using a memory or the like in a personal computer (PC) 111. The PC 111 is connected to the status display apparatus 112 through an address bus/data bus 113, and access to the storage means 101 from the central processing means 105 or the drawing processing means 106 is equivalent to access performed through an internal address bus/data bus 109 within the status display apparatus 100 illustrated in Fig. 1. By employing this configuration, the PC 111 can make the status display apparatus perform operations intended thereby by preparing predetermined data in the areas of the display program 102 and the device control program 103 of the storage means 101, using any means in the PC 111.

In Fig. 4, central processing means 2 114 is provided in a PC 111 which is similar to that in Fig. 3. The central processing means within the status display apparatus 112 is central processing means 1 118. The central processing means 2 114 is capable of generating and changing the content of the storage means 101 at any timing. In general, this is realized by using a mechanism in which the central processing unit (CPU) of the PC 111 generates and changes data in a memory area included in the PC. In other words, this is realized by forming the central processing means 2 114 using the function of the CPU of the PC 111 and forming the storage means 101 using part or all of the memory. For example, the central processing means 2, in a pseudo manner, interprets and executes the display program 102 in which a GUI application is described, and generates the drawing request 200. The drawing processing means 106 reads, interprets, and executes the generated drawing request 200, and thereby performs GUI display using the display means. At this time, the central processing means 1 reads the device control program 103 through the address bus/data bus 113 and interprets and executes it, thereby controlling the device. In this manner, a system is realized in which GUI applications are run on the PC 111 side and display processing and device control processing are performed using the actual device. In addition to performing interpretation and execution of the display program and generation of the drawing request 200 based on this configuration, the central processing means 2 114 may also run applications on the PC 111, thereby newly creating or editing, such as changing, a display program, or may newly create or change a drawing request by directly describing drawing instructions. By utilizing these features, a development environment can be formed which enables development of GUI applications using a PC and efficient execution of debugging.

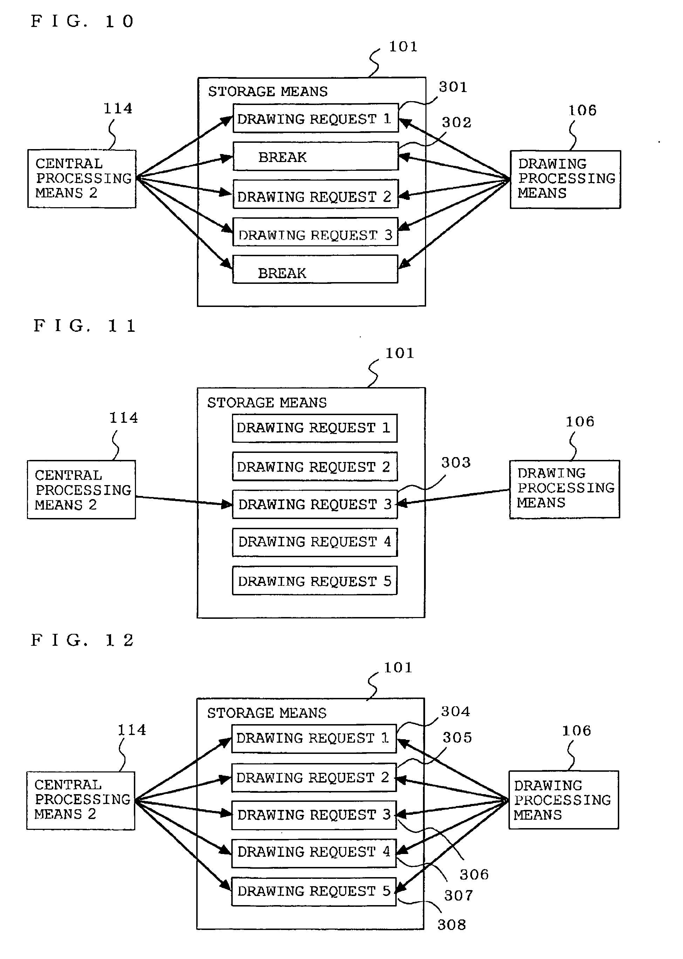

For example, referring to Fig. 10, it becomes possible that by inserting a temporary stop command (BREAK) at a certain point in a sequence of drawing requests for executing normal GUI applications, the central processing means 2114 may temporarily stop the drawing processing at any timing specified thereby. This is useful for testing drawing processing step by step when a failure has occurred during the drawing processing, for example. In addition, for example, since the drawing processing means 106 accesses the storage means 101 through the bus, it becomes possible for the central processing means 2 114 to know which address in the storage means 101 is currently being accessed. Hence, when a failure occurs in certain drawing processing and the access from the drawing processing means 106 stops at a fixed address, the central processing means 2 114 can detect that the accessed address has not changed for a predetermined period of time. Hence the address at which the failure has occurred can be predicted or identified, and it can be predicted or identified what drawing request has caused a failure on the basis of the content of a drawing request 303 (refer to Fig. 11) stored at the address, and what portion of a GUI application has caused the failure on the basis of the GUI application which output the drawing request. Further, as illustrated in Fig. 12, using only the limited storage means 101, various kinds of GUI display, such as infinitely repeating display and continuously changing display for a very long time, can be performed as a result of the central processing means 2 114 continuously rewriting drawing requests 304 to 308 in accordance with the transition of access made by the drawing processing means 106.

In general, the actual built-in device on the drawing processing means 106 side has more restrictions and a narrower accessible address range than the PC 111 on the central processing means 2 114 side. However, without being limited by these restrictions, a drawing request with a huge amount of data can be delivered to the drawing processing means 106 by using the method illustrated in Fig. 12, whereby richer representation or more complicated operation tests can be realized.

In the above description, the central processing means 1 118 interprets and executes the device control program 103. However, as schematically illustrated in Fig. 5, by killing the functions of the central processing means 1 118, the central processing means 2 114 may also interpret and execute the device control program 103 in a pseudo manner. In this case, the status display apparatus side becomes completely dedicated to GUI display, and is effective for testing pure drawing processing or the like. In addition, as schematically illustrated in Fig. 6, the PC 111 portion illustrated in Fig. 5 may be constituted by a microcomputer 115 used in a built-in device. A development environment may be formed in the microcomputer 115 similarly to as in the PC 111, or may be formed so as to utilize the range defined by the status display apparatus 112 in Fig. 6 to decrease the GUI processing load by separating the GUI processing in the microcomputer 115 from the microcomputer 115. Also in the configuration using the microcomputer 115, as illustrated in fig. 6, a configuration, although not illustrated, may be used in which the central processing means 1 118 and the microcomputer 115 share the execution of processing for the device control program 103 and processing for the display program 102 without killing the functions of the central processing means 1 118.

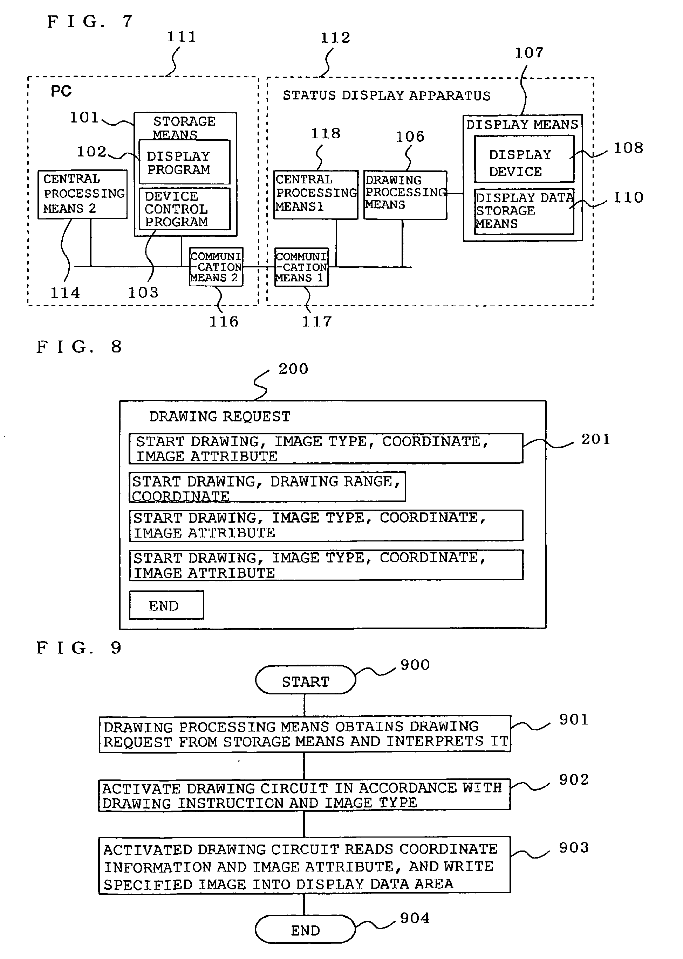

Further, although the status display apparatus 112 and the PC 111 in Fig. 3, for example, have been described above as having a configuration in which they are connected to each other using the address bus/data bus 113, they may be connected to each other using some type of communication means, typically, a serial transmission line, as illustrated in Fig. 7. In this case, when the drawing processing means 106 reads a drawing request from the storage means 101, a bus access signal issued by the drawing processing means 106 is converted by communication means 1 117 into a transaction in accordance with a protocol defined between communication means 2 116 and the communication means 1 117. The communication means 2 116, upon receipt of the transaction, reads a specified drawing request through bus accessing and converts it into a transaction again. The communication means 1, upon receipt of this transaction, converts it into a bus signal so that the drawing processing means 106 can read the drawing request data. Although both sides of the communication means pair use conventional bus access signals in the description above, the communication means 1 may be connected to the drawing processing means 106 and the central processing means 1 118 using a configuration most appropriate for connection with the communication means, and the communication means 2 116 may be connected to the storage means 101 and the central processing means 2 114 using a configuration most appropriate for connection with the communication means. Further, the central processing means 2 114 may or may not be configured to be provided in the PC 111. In addition, the external device, which is illustrated as the PC 111, may be another external device such as the microcomputer 115, similarly to as in Fig. 6. Further, the status display apparatus described in the present embodiment may be not only an apparatus for displaying the status of an air conditioner, but instead may be an apparatus for displaying the status of an electronic device.

As described above, according to the status display apparatus of the present invention, a status display apparatus which enables display on an actual device as a result of drawing processing being performed in an actual built-in device can be realized under the control of a development environment such as a personal computer. Hence, a development environment is obtained which makes it easy to verify the performance, processing load, and display status in the actual built-in device, and realizes a decreased work cycle time during development and high work efficiency.

### Reference Signs List

100 status display apparatus; 101 storage means; 102 display program; 103 device control program; 104 display data; 105 central processing means; 106 drawing processing means; 107 display means; 108 display device; 109 address bus/data bus; 110 display data storage means; 111 external device (PC); 112 status display apparatus; 113 address bus/data bus; 114 central processing means 2; 115 external device (microcomputer); 116 communication means 2; 117 communication means 1; 118 central processing means 1; 200 drawing request; 201 drawing instruction; 301 drawing request 1; 302 temporary stop (BREAK) command; 303 drawing request 3

## Claims

1. A status display apparatus that displays a status of a device, comprising:
display means;
central processing means;
drawing processing means; and
storage means, wherein:
said central processing means, at every predetermined operation unit clock, interprets content stored in said storage means at an instruction address and performs an arithmetic operation, a logic operation, data transfer, instruction address change, or conditional instruction address change;
said drawing processing means shares said storage means with said central processing means and performs a sequence of drawing processing of interpreting content stored in said storage means at an indicated address to compute coordinates of a set of minute points forming an image or a figure, changing memory states at locations corresponding to said coordinates in a predetermined memory space starting at a drawing address in said storage means, and making a next interpretation location be reflected in said indicated address;
said display means shares a predetermined memory space starting at a display address in said storage means with said drawing processing means, and performs display on a display device in accordance with a memory state of the predetermined memory space starting at said display address; and
said storage means and/or said central processing means is allowed to be provided outside of said status display apparatus.

2. A status display apparatus that displays a status of a device, comprising:
display means;
central processing means;
drawing processing means; and
storage means, wherein:
said central processing means, at every predetermined operation unit clock, interprets content stored in said storage means at an instruction address and performs an arithmetic operation, a logic operation, data transfer, instruction address change, or conditional instruction address change;
said drawing processing means shares said storage means with said central processing means, shares display data storage means with said display means, and performs a sequence of drawing processing of interpreting content stored in said storage means at an indicated address to compute coordinates of a set of minute points forming an image or a figure, changing memory states at locations corresponding to said coordinates in a memory space starting at a drawing address in said display data storage means within said display means, and making a next interpretation location be reflected in said indicated address;
said display means shares a predetermined memory space starting at a display address in said display data storage means with said drawing processing means, and performs display on a display device in accordance with a memory state of the predetermined memory space starting at said display address; and
said storage means and/or said central processing means is allowed to be provided outside of said status display apparatus.

3. The status display apparatus of Claim 1 or 2, wherein said storage means is formed of storage means of an external device which is physically different from said status display apparatus.

4. The status display apparatus of any one of Claims 1 to 3, wherein said central processing means is formed of processing means of an external device which is physically different from said status display apparatus.

5. The status display apparatus of any one of Claims 1 to 4, wherein said drawing processing means and the display means, said storage means, and said central processing means are connected to one another by an address bus and a data bus.

6. The status display apparatus of any one of Claims 1 to 4, wherein said drawing processing means and said display means, said storage means, and said central processing means are connected to one another by communication means.

7. The status display apparatus of any one of Claims 1 to 3, wherein said central processing means is provided within said status display apparatus, and second central processing means different from said central processing means is formed of processing means of an external device which is physically different from the status display apparatus.

8. The status display apparatus of Claim 7, wherein said drawing processing means and said display means, said storage means, said central processing means, and said second central processing means are connected to one another by an address bus and a data bus.

9. The status display apparatus of Claim 7, wherein said drawing processing means, said display means, and said central processing means are connected to said storage means and said second central processing means by communication means.

10. A status display apparatus that displays a status of a device, comprising:
display means;
first central processing means;
drawing processing means; and
storage means, wherein:
said first central processing means, at every predetermined operation unit clock, interprets content stored in said storage means at an instruction address and performs an arithmetic operation, a logic operation, data transfer, instruction address change, or conditional instruction address change;
said drawing processing means shares said storage means with said first central processing means and performs a sequence of drawing processing of interpreting content stored in said storage means at an indicated address, computing coordinates of a set of minute points forming an image or a figure, changing memory states at locations corresponding to said coordinates in a predetermined memory space starting at a drawing address in said storage means, and making a next interpretation location be reflected in said indicated address;
said display means shares a predetermined memory space starting at the display address in said storage means with said drawing processing means, and performs display on a display device in accordance with a memory state of said predetermined memory space starting at said display address; and
said storage means is provided within an external device which is physically different from said status display apparatus, and content of said sequence of drawing processing is determined by said external device determining content to be stored in said storage means.

11. A status display apparatus that displays a status of a device, comprising:
display means;
first central processing means;
drawing processing means; and
storage means, wherein:
said first central processing means, at every predetermined operation unit clock, interprets content stored in said storage means at an instruction address and performs an arithmetic operation, a logic operation, data transfer, instruction address change, or conditional instruction address change;
said drawing processing means shares said storage means with said first central processing means, shares display data storage means with said display means, and performs a sequence of drawing processing of interpreting content stored in said storage means at an indicated address to compute coordinates of a set of minute points forming an image or a figure, changing memory states at locations corresponding to said coordinates in a memory space starting at a drawing address in said display data storage means within said display means, and making the next interpretation location be reflected in said indicated address;
said display means shares a predetermined memory space starting at a display address in said display data storage means with said drawing processing means, and performs display on a display device in accordance with a memory state of said predetermined memory space starting at said display address; and
said storage means is provided within an external device which is different from said status display apparatus, and content of said sequence of drawing processing is determined by said external device determining content to be stored in said storage means.

12. The status display apparatus of Claim 10 or 11, wherein content to be stored in said storage means is determined by second central processing means included in said external device.

13. The status display apparatus of any one of Claims 10 to 12, wherein contents determined by said second central processing means and stored in said storage means are a drawing request which said drawing processing means interprets and performs drawing processing.

14. The status display apparatus of Claim 13, wherein said drawing request is formed of a set of at least one drawing instruction each including one of commands: start drawing, end, temporarily stop, change address, and set drawing operation, and, when required by said command, at least one of command parameters: image type, coordinate, image attribute, setting area, and operation setting.

15. The status display apparatus of any one of Claims 10 to 14, wherein processing for an arithmetic operation, a logic operation, data transfer, instruction address change, and conditional instruction address change performed by said first central processing means through interpretation of content stored in said storage means at an instruction address is performed in a pseudo manner by the second central processing means provided in said external device.

16. The status display apparatus of any one of Claims 10 to 15, wherein said second central processing means grasps or manages said indicated address which is an address at which said drawing processing means accesses said storage means.

17. The status display apparatus of Claim 16, wherein said second central processing means detects an operation status of said drawing processing means on the basis of a change in said indicated address.
